# EUROPEAN PATENT APPLICATION

(11) **EP 4 063 442 A1**
(43) Date of publication of application: **28.09.2022**
(21) Application number: 21171932.3
(22) Date of filing: 04.05.2021
(51) Int. Cl.: C08J 11/00, C08J 11/04, C08L 67/04, C08L 89/00, C08L 101/16

(54) **PROCESS FOR THE PREPARATION OF BIOPLASTIC FROM DAIRY WASTE**

(30) Priority: 26.03.2021 IT 202100007424
(71) Applicant: The Eyes Republic, la repubblica degli occhi S.r.l.s., 33170 Pordenone (IT)
(72) Inventor: Vanin, Stefano, 33170 Pordenone (IT); Perazza, Roberto, 33170 Pordenone (IT)
(74) Representative: Leganza, Alessandro

(57) **Abstract**

The present invention relates to the field of bioplastics, in particular, of bioplastics from dairy waste and, even more particularly, the preparation of bioplastics from dairy waste.

## Description

### Technical field

The present invention relates to the field of bioplastics, in particular, of bioplastics from dairy waste and, even more particularly, the preparation of bioplastics from dairy waste.

### Backgroud of the invention

Nowadays the need is felt to be available products of renewable origin (vegetable) or recovery/recycling, rather than those of fossil origin since oil, for example, is not an unlimited resource which is destined to run out, unlike products of renewable origin or recovery/recycling that can be produced indefinitely. Many of the objects that surround us such as the casing of telephones, glasses, bottles, disposable bags, etc. are made from fossil-based plastics, such as polyethylene, polypropylene, polyethyl terephthalate, etc.

In particular, it is essential in the modern world to replace fossil-based plastics with plastics of renewable origin or recovery/recycling. To this end, industrial waste, in particular dairy waste, which have been industrially produced for tens and tens of years, can play a decisive role.

### Summary of the invention

The problem addressed by the present invention is therefore that of providing a process for the preparation of a bioplastic from dairy waste which avoids the aforementioned problems and that can be used for the production of personal items (such as for example mobile phone covers, cases, etc.), coatings, furnishings, electronic gadgets, bags, films, films, etc.

Therefore, the present invention solves the aforementioned problem by means of the process of the present invention and the bioplastic from dairy waste obtainable from said process, as well as from the use and objects that see it used as outlined in the attached claims, the definitions of which are an integral part of the present description, thus allowing to have an absolutely versatile bioplastic, for example for the production of a wide range of plastic objects for daily use.

Furthermore, as an additional advantage, the proposed solution involves the use of only raw materials of renewable origin or recovery/recycling, thus being an eco-sustainable solution.

Further features and advantages of the bioplastic of the invention and of the methods of use will result from the description of the examples of embodiment of the invention, provided as an indication of the invention.

The specific object is a new biochemical process for the creation of a biodegradable plastic obtained from dairy production and processing waste, which in absolute terms could represent a source of strategic industrial raw material still unused.

### Detailed description of the invention

For the purpose of describing this document, the term "and/or", when used in a listing of two or more items, means that any of the items listed can be used alone, or in any combination of two or more of the items listed.

For example, whether a combination is described as containing components A, B and/or C, or, A and/or B and/or C, the composition may contain only A; only B; only C; A and B in combination; A and C in combination; B and C in combination; or A, B and C in combination.

The terms "comprises", "comprising" or any other variation thereof, mean to cover a non-exclusive inclusion, such that a system, method, use, etc. which includes a list of elements, that does not include only those elements, but may include other elements not expressly listed or related to that system, method, use, etc.

An element followed by "includes... a..." does not prevent, without further constraints, the existence of further identical elements in the system, method or use comprising the element.

Milk and whey are made up of water and natural biopolymers, casein, and other proteins for approximately 80%, organically originated and linked by branched and unstable amino acids, enzymatically and biochemically active.

From these natural polymers, a bioplastic can be obtained and manufactured by means of acid precipitation accelerated with a complex of catalysing enzymes, also natural, which leads to the stabilized and plastic hardening of milk and whey proteins.

An object of the present invention is a process for the preparation of bioplastic from dairy waste comprising or, alternatively, consisting of the following steps:
a) loading dairy waste into a suitable apparatus,
b) adding luteolin, cynarin, phytochemase to the dairy waste of step a),
c) subjecting the mass obtained in step b) to centrifugation and heating,
d) separating the casein gel from the polyhydroxyalkanoate,
e) loading the casein gel obtained in step d) into a suitable apparatus,
f) adding to the casein gel of step e): inulin, pelargonic acid, isoprene latex and ficin,
g) subjecting the mass obtained in step f) to sonication,
h) adding to the mixture of step g) the polyhydroxyalkanoate obtained in step d),
i) subjecting the mass obtained in step h) to sonication,
j) adding to the mass obtained in step i) an aqueous solution of mineral fixers,
k) drying the product obtained in step j).

It has indeed been surprisingly found that the process of the present invention allows to prepare a bioplastic, that is a plastic prepared from completely natural ingredients, bioplastic which, due to its intrinsic characteristics, can be validly used for the manufacture of parts of telephones, glasses, and many other commonly used objects, replacing an infinity of synthetic plastics used for example in fashion, telephony, lighting, home automation, etc. Moreover, it can also be used for the production of personal items (such as for example mobile phone covers, cases, etc.), coatings, furnishings, electronic gadgets, in addition to bags, films, cling films, etc. having the biodegradability characteristic.

In the specific object it is a new biochemical process for the creation of a biodegradable plastic obtained from dairy production and processing waste, which in absolute terms could represent a strategic industrial raw material source.

Dairy waste means all waste or residues obtained or remaining at the end of dairy production, waste and/or residues from dairies, comprising whey obtained at the end of dairy processing, or, moreover, it also means whole milk which for several reasons has undergone alterations and can no longer be used for dairy production.

Dairy waste means the dairy industry by-products, which consist of whey, scotta and buttermilk. The volume of these by-products is much substantial and although a certain amount is reused within the dairy production processes, the remaining part is designed for disposal as "special non-hazardous waste" in accordance with Italian legislation.

Moreover, dairy waste means the residues of the various washes to which the dairy products are subjected, which bring with them a good amount of minerals and protein substance, about 0.5% of the total milk delivered for processing; the residues arising from the skimming butter and from the mechanical hydrogenase, such are made of protein serums; residues from the production of pasta filata.

Dairy waste also means waste in the form of scotte, non-curdled serums, unsaturated serums, incorrect precipitations, organoleptic errors, bacterial contamination.

Finally, dairy waste is also the waste and residues of milk and whey deriving from the washings of equipment, plants, pipes, means of transport, tanks, containers and from the recurring operations of maintaining pH, sterilizations, vaporizations, ozonation etcetera; from these are obtained over 50,000 tons per year of polymeric residues made of calcium caseinates, molecular lactose esters, casein mixture, phosphates of various origins and an amount of oleic acids, unsaturated olefins.

From this follows the need to develop a process that allows to enhance these by-products, both from the point of view of any noble portions recoverable through pretreatment processes, and from the point of view of the recovery of the sugar fraction contained (lactose) for obtaining bioplastics.

Step a) could be carried out in a suitable apparatus that allows centrifugation of the mass introduced inside, equipped with a sonotrode able to emit ultrasounds. The suitable apparatus is an ultrasound apparatus.

According to a preferred embodiment of the process, step a) is carried out in a sonic centrifuge.

According to a preferred embodiment of the process, steps a), b), c) and d) are carried out in a sonic centrifuge.

The component that transmits the vibration is called a sonotrode. It has to perform the following functions: transmission of vibratory energy, transmission of the pressure force, transmission of the wave amplitude.

The sonotrode can be a sonicator. A sonicator consists of a current generator, a converter to transform electrical energy into mechanical energy, and probes that amplify the produced vibration. The generator provides high-voltage, high-frequency pulse energy, transforming normal alternating current at 220 volts and 60 Hz into electrical energy at about 1000 V and 20,000 Hz. The converter transforms the high-frequency electrical energy from the generator into mechanical vibration at the specific frequency. The probes amplify the longitudinal vibration produced by the converter.

In step b), luteolin, cynarin, phytochemases are added to the dairy waste introduced into the sonic centrifuge in step a).

Luteolin is a flavone originally isolated from the leaves of thyme, dandelion and sage. It is an off-white colour, almost yellow, crystalline compound.

Cynarin is a polyphenol derived from caffeic acid, present in the artichoke. Chemically it is a diester made of quinic acid and two units of caffeic acid.

The phytochemase is an extract of Galium Verum. Galium verum (or also known as zolfino or gallium rennet) is a perennial herbaceous plant belonging to the Rubiaceae family. Phytochemase is an enzyme responsible for the coagulation of milk.

According to a preferred embodiment of the process, steps a) and b) provide for: 100 litres of dairy waste are introduced into a sonic centrifuge, to which luteolin, cynarin and phytochemases are added, in the measures of 10 grams for each substance.

According to a preferred embodiment of the process, luteolin, cynarin and phytochemase are added in a hydrogen peroxide solution, i.e. peroxide. The solutions are composed of equal amounts of components, for example, luteolin solution consisting of 10 grams of luteolin and 10 grams of hydrogen peroxide.

According to a preferred embodiment of the process, in step c), the mixture obtained in step b) is separated by sonic centrifugation in the protein and mineral parts from the whey, with precipitation or light sonic curd.

The heat locally produced, in step c), by the sonic vortices leads to the inactivation of bacteria and moulds contained in the dairy waste and to the development of the biochemical action of the enzymes that form an agglutinated rennet of casein and lipid protein gel.

According to a preferred embodiment of the process, in step c), with low sonication rates structural and metabolic changes in the cells of the proteins are allowed without their destruction.

According to a preferred embodiment of the process, in step c), low sonication rates mean a sonication of the mixture with frequencies between 50kHz and 1000kHz.

According to a preferred embodiment of the process, in step c), the sonication of the mixture takes place concomitant with frequencies between 50kHz and 1000kHz.

In step c), the mixture obtained in step b) is heated. The heating is carried out by bringing the temperature in a range between 70°C and 100°C.

In step c), the mixture obtained in step b) is heated. Heating is carried out by bringing the temperature between 70°C and 100°C.

According to a preferred embodiment of the process, the temperature increase to over 70°, by sonication, causes the separation of the liquid part of the whey from the casein gel being formed by acid precipitation.

In step c), the proteins contained in the dairy wastes are denatured, except for the casein which is not denatured.

In step c), in this phase of precipitation-separation of the casein from the denatured proteins and lipids of the whey, they are solubilized in monomer form with the activation of some functional carboxy groups through which molecular bonds are formed with phosphorus and calcium bridges. Thus, a weak, but structured, polymer chain, a polyhydroxyalkanoate (PHA), with a high number of carboxylic groups at the far ends of the molecules, is formed.

The PHAs are aliphatic polyesters, the polymer chains of the PHAs could consist of a number of monomers of 3-hydroxy-alkanoate (3HA) comprised between 100 to 30000. The monomer unit of which is: 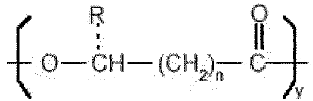 (n = n° of CH2 of the linear chain, y = n° of repetitive units, typically 100÷30000).

The chirality feature of the monomer gives rise to polymers provided with steric regularity; the main types of PHA identified consist of monomers belonging to the group of β/3 (R-) hydroxy acids, and to a lesser extent also γ, δ, ε (R-) hydroxy acids. The side group "R" in position β (3) is an alkyl with C=1÷13, which could be linear or branched, saturated or unsaturated, with aromatic or halogenated substituents. Depending on the length of the side chain, PHAs are distinguished in short side chain (R= CH3, C2H5) or medium side chain (R= C3H7, C13H27) polymers.

The different typology of the substituent groups of the side chain configures a considerable variability in the properties of the PHAs, indeed it is possible to find in their family thermoplastic polymers of a rigid nature such as polyhydroxybutyrate (PHB) or thermoplastic elastomers such as polyhydroxy octanoate (PHO), while their molecular weight is included in the range 10÷5000 kDa.

In step d), the separation of the curd casein mass from the PHA colloid takes place.

In step d), the separation of the casein gel from the polyhydroxyalkanoate colloid takes place.

In step e), all of the curd casein obtained in step d) is inserted into a suitable apparatus.

In step e), all of the curd casein gel obtained in step d) is inserted into a suitable apparatus.

According to a preferred embodiment of the process, in step e), all of the curd casein gel, obtained in step d), is inserted into a sonic reactor.

According to a preferred embodiment of the process, steps e), f), g), h) and i) are carried out in a sonic reactor.

In step f), different amounts of enzymatic catalysts are added to the curd casein gel inserted into the sonic reactor, according to step e), said enzymatic catalysts have the function of functionalizing the entire outer surface of each casein particle.

In step f), different amounts of enzymatic catalysts are added to the curd casein gel inserted into the sonic reactor, according to step e), said enzymatic catalysts can be for example inulin, pelargonic acid, ficin. These catalysts are used as catalysts in the formation of polymeric fibrous chains.

In step f), inulin, pelargonic acid, isoprene latex and ficin are added to the curd casein gel inserted into the sonic reactor, according to step e), as catalysts in the formation of polymer fibrous chains in the compound.

Inulin is a carbohydrate polymer with a molecular weight lower than starch (about 5000 Da), slightly soluble in water. It is the β-D-fructose polymer, in which the monomers are joined with β-2,1-glycosidic bonds. By the action of the enzyme inulase the resulting hydrolysis produces fructose. Inulin is mainly present in Jerusalem artichoke tubers, chicory and the roots of scorzonera, carlina acaulis (or wild artichoke).

Pelargonic acid is a carboxylic acid. It is one of the rare fatty acids with odd number of carbon atoms. At room temperature it appears as a colourless oily liquid with a faint smell of wax. It is found in nature in the Pelargonium plants, of the family Geraniaceae, from which it takes its common name, and in other plant extracts.

Ficin, also known as ficain or ficin E, is a vegetal protease belonging to the family of cysteine proteases (CP), such as better known as papain from papaya and bromelain from pineapple stem. It is isolated especially from the latex of Ficus glabrata, but is also present in other species of Ficus sp., such as Ficus Carica and Ficus Elastica. Its amino acid sequence, for residues close to the active site, approaches the corresponding sequence in papain.

According to a preferred embodiment of the process, in step f), inulin, pelargonic acid, isoprene latex and ficin are added, in the measure of 10 grams for each product per 100 litres of dairy waste.

In step g), the reaction mass obtained in step f) is subjected to sonication.

Step g) is preferably carried out by means of a sonic reactor.

Step g) can also be called high frequency biochemical sonication, this step takes place in a sonic reactor, in particular having the functionalization of the external surfaces of the rigid casein proteins and subsequent creation of a reinforced and elastic polymer chain.

In step g), the functionalization of the entire external surface of each casein particle takes place, for this purpose a sonic or ultrasonic dispersion method of different amounts of enzymatic catalysts is applied, which are added in step f).

Step g) is preferably carried out by hypersonication, by means of a sonic reactor.

The hypersonication of step g) takes place with rapid frequency and state changes, with five cycles of 10 minutes each, wherein rotation and counter rotation takes place, with phases that generate vortex and counter vortex speeds of 100 at 1000kmh. Hypersonication at various powers creates vacuum fields or ultrasonic cavitations in the polymer mass with bubbles of force that grow in alternating phases of high and low pressure, or compression and rarefaction.

According to a preferred embodiment of the process, in step g), the sonication takes place at frequencies comprised between 30kHz to 18kHz.

In step g), several sonication or hypersonication cycles lead the bubbles to collapse due to energy accumulation in the extreme conditions of local temperatures up to 5000K, pressures up to 2000 atmospheres and vortex speeds up to 280 m/s. These forces create chemical and physical conditions that result in increases in mass transfer, i.e. in an increase in the ion pump effect in the molecules, with the formation of clots and branched, radial and tangential polymer chains.

In step h), the polyhydroxyalkanoate obtained in step d) is added to the reaction mass contained in the sonic reactor, according to step g).

In step h), the hydrolysed polyhydroxyalkanoate gel obtained in step d) is inserted into the sonic reactor for a further sonication cycle together with the casein mass obtained in step g).

According to a preferred embodiment of the process, in step i), the sonication takes place at frequencies comprised between 30kHz to 18kHz.

In step i), a further sonication cycle is carried out on the mass obtained in step h).

According to a preferred embodiment of the process, in step i), two sonication cycles, of 30 minutes each, with power of 10kw and set frequencies comprised between 18 and 20 kHz, are performed on the mass obtained in step h) . This sonication will form monomer particles of conjugation among proteins, surrounded by boundary layers of molecules that will break with the sonic energy supplied by the reactor and will undergo the formation of bridges with the micellar proteins of casein.

In step j), the mass obtained at the end of the sonication cycles of step i), is extracted from the sonic reactor. The extracted mass appears as a colloidal and doughy material.

In step j), an aqueous solution of mineral fixers is added to the mass obtained in step i).

According to a preferred embodiment of the process, in step j), the colloidal and doughy material obtained at the end of step i) is extracted from the sonic reactor, and it is subjected to successive baths of mineral fixers with antibacterial and plasticizing properties.

According to a preferred embodiment of the process, the mineral fixers used in step j) are titanium hydroxide and fossil chitin.

According to a more preferred embodiment of the process, the mineral fixers used in step j) are aqueous solutions of 2% titanium hydroxide and 0.5% fossil chitin.

According to a more preferred embodiment of the process, the fossil chitin is chitosan extracted from Dolomia.

According to a preferred embodiment of the process, in step j), the baths take place by stirring through a mixer of the mass of product obtained in step i), in this step further hydrogen bonds will be formed between the adjacent polymers, ensuring to the product a considerable hardness.

In step k), the mass obtained at the end of the baths of step j) is dried.

In step k) the product obtained in step j) is dried.

At the end of the drying step k), a product with a considerable hardness is obtained. This feature will be added to the flexibility of the carboxylic bridges, and while remaining degradable by endogenous enzymes, the strong antibiotic charge given by the mineral fixer baths will prevent any bacterial growth in the microporosities of the material, i.e. the product is antibacterial.

The process of the invention allows the preparation of a bioplastic from dairy waste, with a considerable hardness, a considerable flexibility of carboxylic bridges, remaining degradable by endogenous enzymes, i.e. remaining biodegradable, it is antibacterial.

The final material resulting from the process of the invention, could also be called Lactite, is a biodegradable plastic material, which can be split into pellets for all subsequent transformations: shaping, thermoforming, extrusion, injection and lamination. Moreover, it is reusable and recyclable, suitable for the production of personal items, coatings, furnishings, electronic gadgets and to replace many plastics of petrochemical origin in common uses.

Lactite is antibacterial, fireproof, antistatic, white in colour, silky to the touch. Moreover, it can be permanently coloured with oxides and mineral pigments or with water-soluble vegetable dyes.

The process of the present invention for the preparation of bioplastic from dairy waste has a transformation yield of 98% of the organic starting material.

Finally, said bioplastic, unlike plastics of fossil origin, is completely biodegradable.

The bioplastic prepared with the process of the present invention allows to effectively replace many plastics of fossil origin, since it has the same values of the hardness and/or Young's modulus features of the plastics of fossil origin, thus allowing the creation of objects such as in the fashion sector, telephony, lighting, home automation, etc.

Another object is therefore the bioplastic from dairy waste obtainable according to the process of the present invention.

Another object appears to be an article or an object comprising bioplastic from dairy waste, as obtainable from the process of the present invention.

Finally, a further object is the use of bioplastics from dairy waste, as obtainable from the process of the present invention, for the production of personal items, coatings, furnishings, electronic gadgets, bags, films, cling films.

From the above description the advantages of the process and of the bioplastic of the present invention are evident, which, albeit in its relatively simple realization, simultaneously solves many problems, with one and only one preparation process.

## Claims

1. Process for the preparation of bioplastic from dairy waste comprising or, alternatively, consisting of the following steps:
a) loading dairy waste into an appropriate apparatus,
b) adding luteolin, cynarin, phytochemase to the dairy waste from step a);
c) subjecting the mass obtained in step b) to centrifugation and heating,
d) separating the casein gel from the polyhydroxyalkanoate,
e) loading the casein gel obtained in step d) into a suitable apparatus,
f) adding to the casein gel from step e): inulin, pelargonic acid, isoprene latex and ficin,
g) subjecting the mass obtained in step f) to sonication,
h) adding to the mixture of step g) the polyhydroxyalkanoate obtained in step d),
i) subjecting the mass obtained in step h) to sonication,
j) adding to the mass obtained in step i) an aqueous solution of mineral fixers,
k) drying the product obtained in step j).

2. Process according to claim 1 wherein the steps from a) to d) are carried out in a sonic centrifuge.

3. Process according to any one of claims 1 to 2, wherein in step c) the sonication with frequencies between 50kHz and 1000kHz takes place at the same time.

4. Process according to any one of claims 1 to 3, wherein in step c) the heating is carried out at a temperature comprised between 70°C and 100°C.

5. Process according to any one of claims 1 to 4, wherein step e) is carried out in a sonic reactor.

6. Process according to any one of claims 1 to 5, wherein in steps g) and i) the sonication occurs at frequencies between 30kHz and 18kHz.

7. Process according to any one of claims 1 to 6, wherein in step j) the mineral fixers are aqueous solutions of 2% titanium hydroxide and 0.5% fossil chitin.

8. Bioplastic from dairy waste obtainable according to the process of any one of claims 1 to 7.

9. Object or article comprising bioplastic from dairy waste according to claim 8.

10. Use of bioplastics from dairy waste according to claim 8 for the production of personal items, coatings, furnishings, electronic gadgets, bags, films, cling films.
